# FASCICULE DE BREVET EUROPEEN

(11) **EP 2 653 441 B1**
(45) Date de publication et mention de la délivrance du brevet: **30.07.2014**
(21) Numéro de dépôt: 13162688.9
(22) Date de dépôt: 08.04.2013
(51) Int. Cl.: B67D 1/08, F16L 37/092, F16L 21/08, F16L 39/00, F16L 53/00

(54) **Dispositif et procédé pour remplacer un tube définissant une portion de circuit de transport de fluide**
Vorrichtung und Verfahren zum Ersetzen eines Rohrs, das einen Abschnitt eines Flüssigkeitskreislaufsystems darstellt
Device and method for replacing a tube defining a portion of a fluid-transport circuit

(30) Priorité: 16.04.2012 FR 1253481
(43) Date de publication de la demande: 23.10.2013
(73) Titulaire: Parker Hannifin Manufacturing France SAS, 74112 Annemasse (FR)
(72) Inventeur: Le Quere, Philippe, 35830 Betton (FR)
(74) Mandataire: Lavialle, Bruno François Stéphane

(56) Documents cités:
- EP-A1- 1 258 666
- EP-A2- 1 308 662
- DE-A1- 4 326 633
- DE-U1- 8 710 888
- US-A- 3 494 639

## Description

La présente invention concerne un dispositif et un procédé pour remplacer un tube formant une portion d'un circuit de transport de fluide.

Il est connu des circuits de transport de liquide alimentaire dans lesquels il est nécessaire de maintenir un fluide à température soit chaude par exemple pour préserver sa viscosité soit froide par exemple pour un fluide alimentaire afin de limiter le risque d'une contamination du liquide alimentaire par des microorganismes et une prolifération de ceux-ci. A cette fin, les circuits de transport de liquide alimentaire comportent un tube engagé de manière étanche dans un canal d'un corps de telle manière qu'un tronçon de ce tube soit reçu dans un chambrage du canal. La surface externe du tronçon de tube définit ainsi avec une surface intérieure du chambrage un espace de circulation d'un liquide caloporteur autour du tronçon de tube. Pour assurer cette circulation, le corps est pourvu extérieurement de moyens de connexion à une ligne d'amenée du liquide caloporteur au chambrage et à une ligne de sortie du liquide caloporteur hors du chambrage. La ligne d'amenée et la ligne de sortie sont reliées à un groupe de réfrigération assurant le maintien du fluide caloporteur à une température adaptée, généralement moins de 5°C.

Il est nécessaire de remplacer le tube de transport du liquide alimentaire en cas de détérioration de ce tube ou dans le cadre d'opérations périodiques de maintenance.

Dans les circuits de transport équipés d'un dispositif de refroidissement, le remplacement du tube nécessite de purger le dispositif de refroidissement avant de démonter le dispositif, d'extraire le tube de transport de liquide alimentaire hors du corps de refroidissement, de le remplacer par un autre et de remonter le dispositif de refroidissement. L'opération de remplacement est donc relativement longue et contraignante.

Il est connu des documents DE 8710888 et DE4326633, un outil de jonction destiné à connecter une extrémité d'un tube de transport existant avec une extrémité d'un nouveau tube de transport de remplacement. Le remplacement du tube existant se fait par traction sur le tube existant. Le tube de remplacement est ainsi entraîné par le tube existant jusqu'à se substituer totalement à celui-ci. On désolidarise alors les extrémités de chaque tube de l'outil de jonction. Ces dispositifs sont utilisés pour le remplacement de lignes dans des conduits maçonnés ou dans les canaux de lignes multiples. L'utilisation du premier de ces dispositifs pour le remplacement d'un tube de transport reçu de manière étanche dans un chambrage d'un canal est inadapté car la jonction entre les deux extrémités du dispositif ne permet pas un passage étanche au travers du canal et est même susceptible de venir en butée contre une des faces réalisant le chambrage du canal. Le second dispositif requiert le vissage de vis pression pour enfoncer des épines dans les tubes afin de les solidariser au dispositif. Ce dispositif requiert de l'outillage spécial pour le vissage et le dévissage, les épines endommagent le tube et peuvent compromettre son étanchéité. Ceci oblige à découper la portion de tube sur laquelle a été réalisée l'accroche des épines. Il est alors délicat de s'assurer que l'intégralité de la portion ainsi endommagée est retirée sans utiliser des moyens de contrôle particulier. Ainsi, l'utilisation d'un tel dispositif est fastidieux, dangereux pour l'utilisateur en raison de la présence d'épines et présente le risque de conserver une extrémité endommagée dans le nouveau circuit (élimination omise ou incomplète de l'extrémité endommagée).

L'utilisation de raccords instantanés comprenant une bague extérieure, tel que les raccords décrits dans les documents EP1308662 et EP 1258666 ou ne présentant pas des moyens d'exercer une traction importante tel que le raccord du document US 3494639 ne permet pas le remplacement d'un tube de transport reçu de manière étanche dans un chambrage d'un canal.

Un but de l'invention est de fournir un moyen permettant de simplifier le remplacement d'un tube dans de tels circuits.

A cet effet, on prévoit, selon l'invention, un dispositif pour substituer un premier tube à un deuxième tube engagé de manière étanche dans un canal d'un corps de telle manière qu'un tronçon de ce tube soit reçu dans un chambrage du canal pour définir avec une surface intérieure de ce chambrage un espace de circulation d'un fluide autour du tronçon de tube, le dispositif comportant une union ayant deux extrémités mâles agencées pour être engagées respectivement dans le premier tube et dans le deuxième tube, l'une des extrémités mâles de l'union étant également agencée pour être engagée à force dans l'extrémité de tube et étant pourvue d'une rainure axiale externe , l'union ayant un diamètre extérieur maximal inférieur à un diamètre minimal du passage.

Ainsi, l'union réunit les deux tubes tout en ayant des dimensions lui permettant de passer dans le canal du corps sans qu'il y ait une rupture d'étanchéité avec le corps lors de la substitution du premier tube au deuxième tube. Il n'est dès lors pas nécessaire de purger l'espace de circulation avant la substitution. La rainure axiale externe permet un guidage de la lame de l'outil coupant, évitant tout risque de blessure de l'opérateur. La découpe ayant lieu sur la portion de tube sollicitée par l'engagement en force de l'extrémité mâle de l'union, l'utilisation de l'union selon l'invention permet de s'assurer que l'intégralité de la portion sollicitée est déposée préalablement aux opérations de mise en service du tube de remplacement.

L'invention a également pour objet un procédé de substitution d'un premier tube à un deuxième tube engagé de manière étanche dans un canal d'un corps de telle manière qu'un tronçon de ce tube soit reçu dans un chambrage du canal pour définir avec une surface intérieure de ce chambrage un espace de circulation d'un fluide autour du tronçon de tube. Le procédé comprend les étapes de :
- relier les deux tubes au moyen d'une union (200) ayant deux extrémités mâles agencées pour être engagées respectivement dans le premier tube et dans le deuxième tube, l'une de ces extrémités mâles étant également agencée pour être engagée à force dans l'extrémité de tube et étant pourvue d'une rainure axiale externe, l'union ayant un diamètre extérieur maximal inférieur à un diamètre minimal du passage;
- faire coulisser les deux tubes par rapport au corps jusqu'à ce que le premier tube ait pris la place du deuxième tube sans purger l'espace de circulation ;
- engager, dans le tube dans lequel est engagé l'extrémité de l'union pourvue d'une rainure, une lame en regard de cette rainure jusqu'à ce que la lame soit reçue dans ladite rainure;
- déplacer la lame ainsi guidée dans la rainure pour fendre le tube et pouvoir en dégager l'union;
- séparer le deuxième tube du premier tube et ôter l'union.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en coupe longitudinale illustrant la substitution d'un tube à un autre, conformément au procédé de l'invention, dans un dispositif de refroidissement ;
- la figure 2 est une vue en perspective d'un dispositif de substitution selon un premier mode de réalisation de l'invention ;
- la figure 3 est une vue en coupe longitudinale d'un dispositif de substitution selon une variante de réalisation ;
- les figures 4 à 6 sont des vues en coupe longitudinale d'un dispositif de substitution selon un deuxième mode de réalisation, respectivement au moment de la connexion avec les tubes, lorsqu'un effort de traction est exercé sur l'un des tubes et au moment de la déconnexion des tubes.

L'invention est ici décrite en application aux circuits de distribution de liquides alimentaires, comme la bière, qui sont équipés d'un dispositif de refroidissement relié à un circuit de liquide caloporteur.

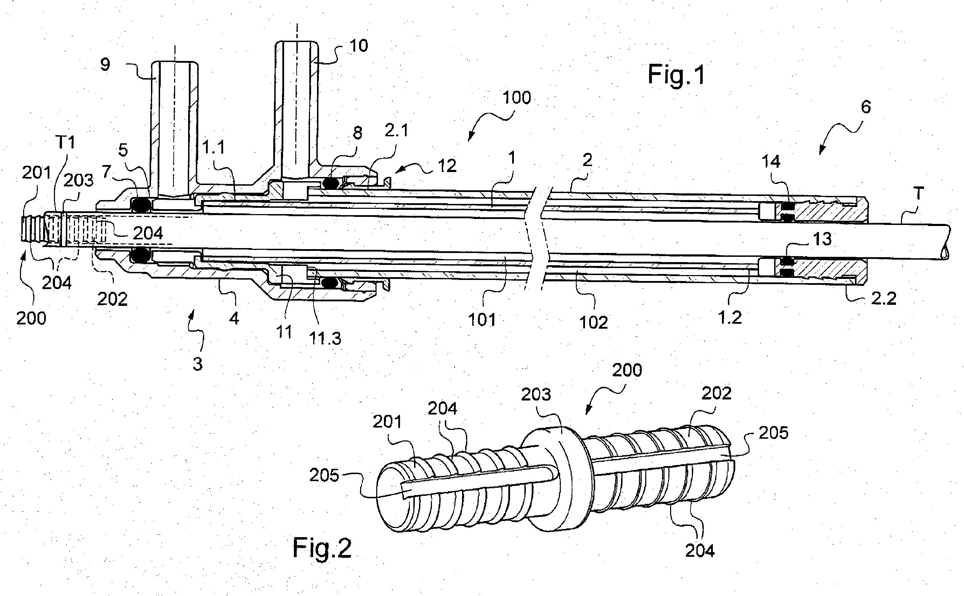

En référence à la figure 1, le dispositif de refroidissement est plus particulièrement ici destiné à la circulation d'un fluide caloporteur, par exemple de l'eau réfrigérée, autour d'un tube T de transport de fluide, par exemple un liquide alimentaire comme une boisson plate ou gazeuse telle que de la bière, un soda... L'eau réfrigérée est transportée par un circuit reliant le dispositif à un ensemble de réfrigération non représenté sur la figure 1.

Le dispositif comprend un corps principal 100 délimitant un canal 5 et comportant un tube intérieur 1, un tube extérieur 2, un premier raccord 3 et un deuxième raccord 6.

Le tube intérieur 1 et le tube extérieur 2 sont coaxiaux et sensiblement de mêmes longueurs. Le tube intérieur 1 délimite un chambrage de réception du tube T et a un diamètre interne supérieur à un diamètre externe du tuyau T pour ménager entre eux un espace de circulation du fluide caloporteur et le tube extérieur 2 a un diamètre interne supérieur à un diamètre externe du tube intérieur 1 pour ménager entre eux un espace de circulation du fluide caloporteur. Les tubes 1, 2 comportent de préférence au moins une portion en un matériau isolant thermiquement.

Le premier raccord 3 a un corps tubulaire 4 agencé pour entourer de manière étanche un tronçon du tuyau T et pour recevoir des premières extrémités 1.1, 2.1 des tubes 1, 2 en maintenant un décalage axial entre les tubes 1, 2 de manière à définir de manière étanche un premier conduit de circulation 101 entre le tube intérieur 1 et le tuyau T et un deuxième conduit de circulation 102 entre les tubes 1, 2. Le corps 4 est pourvu d'un joint d'étanchéité 7 dimensionné pour être comprimé entre une surface externe du tuyau T et une paroi du canal 5 et d'un joint d'étanchéité 8 dimensionné pour être comprimé entre une surface externe du tube externe 2 et une paroi du canal 5. Une conduite d'amenée 9 de l'eau réfrigérée s'étendant en saillie à l'extérieur du corps tubulaire 4 débouche dans le canal au voisinage du joint d'étanchéité 7. La conduite d'amenée 9 est destinée à être raccordée à la branche aller du circuit d'eau réfrigérée. Une conduite d'évacuation 10 de l'eau réfrigérée s'étendant en saillie à l'extérieur du corps tubulaire 4 débouche dans l'espace de circulation de l'eau réfrigérée au voisinage du joint d'étanchéité 8. La conduite d'évacuation 10 est destinée à être raccordée à la branche retour du circuit d'eau réfrigérée. Le canal 5 dans le corps 4 reçoit de manière serrée une douille 11 agencée pour recevoir de façon serrée la première extrémité 1.1 du tube intérieur 1. La douille 11 a une première portion d'extrémité pour maintenir le joint d'étanchéité 7 dans son logement et une deuxième portion d'extrémité pour maintenir le joint d'étanchéité 8 au voisinage des moyens de connexion 12 au tube externe 2 qui sont logés dans le corps 4. La douille 11 comprend des butées internes s'opposant à l'enfoncement du tube extérieur 2 et du tube intérieur 1 de manière à maintenir le décalage axial des tubes 1, 2 de telle manière que la première extrémité 1.1 du tube intérieur 1 s'étende en saillie axiale de la première extrémité 2.1 du tube extérieur 2.

Le deuxième raccord 6 est agencé pour entourer de manière étanche une portion du tuyau T et coopérant avec des deuxièmes extrémités 1.2, 2.2 des tubes 1, 2 pour mettre en communication le premier conduit 101 avec le deuxième conduit 102. Le deuxième raccord 6 est en forme de bouchon annulaire agencé pour être engagé dans la deuxième extrémité 2.2 du tube extérieur 2 en constituant une butée pour la deuxième extrémité 1.2 du tube intérieur 1 de manière à maintenir le décalage axial entre les tubes 1, 2. Le bouchon est pourvu d'une gorge interne et d'une gorge externe recevant chacune un élément annulaire d'étanchéité 13, 14 pour assurer une étanchéité de contact avec le tuyau T et le tube extérieur 2 respectivement.

Le dispositif de l'invention est agencé pour substituer un premier tuyau T1 au tuyau T engagé de manière étanche dans le canal 5 du corps principal 100 du dispositif de refroidissement. Les tuyaux T et T1 sont ici identiques l'un à l'autre.

En référence également à la figure 2, le dispositif de l'invention comporte une union 200 ayant deux extrémités mâles 201, 202, ici identiques, agencées pour être engagées respectivement dans le premier tuyau T1 et dans le deuxième tuyau T.

L'union comporte une portion centrale 203 entre les extrémités 201, 202. La portion centrale 203 a un diamètre supérieur à celui des extrémités 201, 202 pour former une butée s'opposant à l'enfoncement de l'union dans les tuyaux T1, T. La portion centrale 203 a en outre un diamètre extérieur maximal inférieur à un diamètre minimal du canal 5.

Les extrémités 201, 202 sont agencées pour être engagées à force dans l'extrémité de tuyau T1, T. Les extrémités 201, 202 sont pourvues de reliefs 204 d'accrochage de l'extrémité de tuyau T, T1. Les reliefs sont ici annulaires avec un profil en dents de sapin. La présence de plusieurs reliefs permet d'assurer un accrochage efficace en conservant un diamètre externe des reliefs qui ne soit pas trop important de manière à ne pas trop déformer le tuyau.

Les extrémités 201, 202 sont pourvues d'une rainure axiale externe 205 dont la fonction sera expliquée plus loin.

Le procédé de substitution d'un premier tuyau T1 à un deuxième tuyau T engagé de manière étanche dans le canal 5 d'un corps 100 d'un dispositif de refroidissement va maintenant être détaillé.

Le procédé comprend les étapes de :
- relier les deux tuyaux T1, T au moyen de l'union 200 ;
- faire coulisser les deux tuyaux T1, T par rapport au corps 100 jusqu'à ce que le premier tuyau T1 ait pris la place du deuxième tuyau T sans purger l'espace de circulation 101, 102 ;
- séparer le deuxième tuyau T du premier tuyau T1 et ôter l'union.

On notera que lors de la deuxième étape effectuée en tirant ou poussant les tuyaux, l'union 200 passe dans le canal 5 et au travers des joints 7 et 13. Il n'est donc pas nécessaire de démonter le dispositif de refroidissement ni de purger celui-ci, l'étanchéité de l'espace de circulation 101, 102 n'étant jamais rompu. On veillera à cette fin que l'introduction de l'union dans les tuyaux n'entraîne pas une déformation radiale des tuyaux risquant de gêner leur coulissement dans ledit canal.

La troisième étape de séparation des tuyaux comprend une étape de découpe de la portion des tuyaux T1, T engagée sur l'union 200 de manière à pouvoir dégager l'union 200. La découpe est réalisée en engageant une lame dans le tuyau en regard de la rainure 205 jusqu'à ce que la pointe de la lame soit reçue dans ladite rainure 205 puis à déplacer la lame ainsi guidée dans la rainure 205 pour fendre le tuyau et pouvoir dégager l'union 200. On remarque que le guidage de la lame procuré par la rainure 205 est particulièrement sécurisant pour l'opérateur car la lame ne risque pas de « ripper » pendant la découpe.

L'opérateur, après avoir recoupé proprement l'extrémité du tube T1 n'a plus qu'à raccorder celui-ci au circuit de transport de liquide alimentaire.

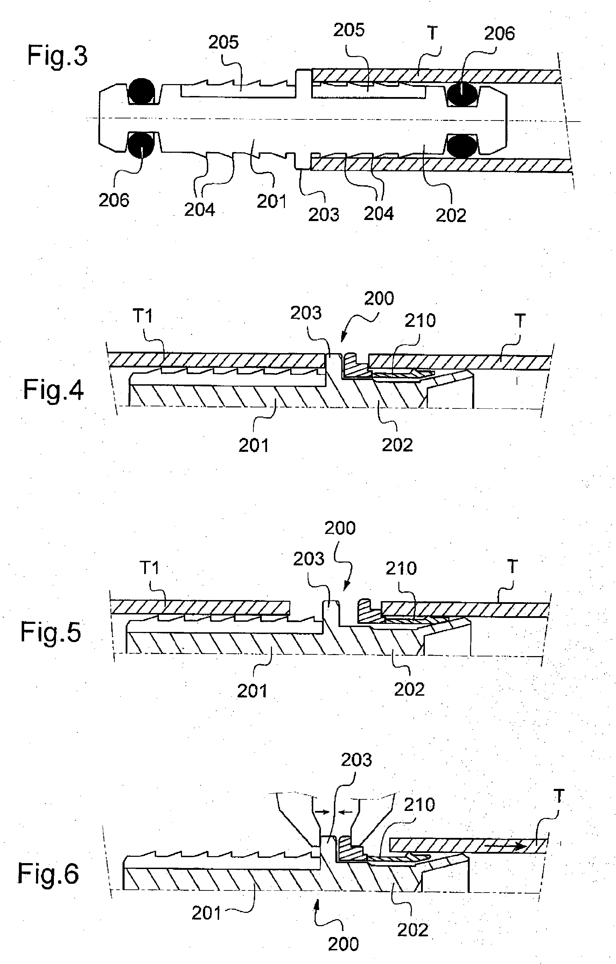

Dans la variante de la figure 3, les extrémités 201, 202 sont pourvues à l'opposé de la portion centrale 203 d'une gorge recevant un élément annulaire d'étanchéité 206.

Ceci permet d'éviter que du liquide de refroidissement ne pénètre dans les tuyaux et souille le produit qu'ils contiennent ou qu'ils sont destinés à contenir.

Les éléments identiques ou analogues à ceux précédemment décrits porteront la même référence numérique dans la description qui suit du deuxième mode de réalisation.

Dans le mode de réalisation des figures 4 à 6, les reliefs de l'extrémité mâle 202 de l'union 200 engagée dans le tube T sont remplacés par une pince 210 pour coulisser entre une position rapprochée de libération (figures 4 et 6) et une position écartée de retenue (figure 5). Cette pince 210 constitue de façon connue en elle-même des moyens de raccordement instantané à l'extrémité de tuyau T.

Lors de l'introduction de l'extrémité 202 de l'union 200 dans l'extrémité de tuyau T, la pince est repoussée vers la partie centrale 203 dans leur position de libération (figure 4). Les reliefs de cramponnage des pinces mordent toutefois légèrement dans la paroi du tuyau T.

Lorsqu'une traction est exercée sur les tuyaux T, T1, les tuyaux T, T1 se déplacent par rapport à l'union en entraînant la pince 210 (figure 5) vers sa position de retenue. On notera que l'extrémité 202 est évasée ce qui va provoquer une expansion radiale de la pince dont le relief de cramponnage va plus profondément pénétrer dans la paroi du tuyau T: ceci permet d'assurer la retenue de la pince sur l'union et de renforcer l'accrochage du tuyau par la pince.

Le retrait de l'union 200 est effectué en déposant tout d'abord l'extrémité du tube T1 de l'extrémité 201 de l'union 200 selon le procédé précédemment exposé. L'extrémité du tube T est, quant à elle, déposée de l'extrémité de l'union 202 au moyen d'une pince permettant d'amener la pince 210 dans sa position de libération (figure 6). L'opérateur tire alors sur le tuyau T pour le dégager de l'union 200.

Bien entendu, l'invention n'est pas limitée aux modes de réalisation décrits mais englobe toute variante entrant dans le champ de l'invention telle que définie par les revendications.

En particulier, l'invention est utilisable pour toute substitution d'un tube à un autre.

En variante, un seul relief peut suffire et le relief peut ne pas être annulaire. Les moyens d'accrochages des tuyaux peuvent avoir une autre forme et comprendre par exemple une rondelle à dents déformables élastiquement, une bague fendue à dent ou des moyens de connexion instantanée.

L'union peut être tubulaire et ne pas être symétrique. La portion centrale en saillie est facultative.

Le corps du dispositif de refroidissement peut être monobloc.

## Revendications

1. Dispositif pour substituer un premier tube (T1) à un deuxième tube (T) engagé de manière étanche dans un canal d'un corps (100) de telle manière qu'un tronçon de ce tube soit reçu dans un chambrage du canal pour définir avec une surface intérieure de ce chambrage un espace de circulation d'un fluide autour du tronçon de tube, le dispositif comportant une union (200) ayant deux extrémités mâles (201, 202) agencées pour être engagées respectivement dans le premier tube et dans le deuxième tube, l'une des extrémités mâles (201, 202) de l'union (200) étant également agencée pour être engagée à force dans l'extrémité de tube, l'union ayant un diamètre extérieur maximal inférieur à un diamètre minimal du passage, **caractérisé en ce que** ladite extrémité mâle agencée pour être engagée à force dans l'extrémité de tube est pourvue d'une rainure axiale externe (205).

2. Dispositif selon la revendication 1, dans lequel au moins l'une des extrémités mâles (201, 202) de l'union (200) est pourvue d'un élément annulaire d'étanchéité (206).

3. Dispositif selon la revendication 1, dans lequel ladite extrémité mâle (201, 202) agencée pour être engagée à force dans l'extrémité de tube est pourvue d'au moins un relief d'accrochage (204) de l'extrémité de tube.

4. Dispositif selon la revendication 1, dans lequel au moins l'une des extrémités mâles (201, 202) de l'union (200) est pourvue de moyens de raccordement instantané (210) à l'extrémité de tube.

5. Procédé de substitution d'un premier tube (T1) à un deuxième tube (T) engagé de manière étanche dans un canal d'un corps (100) de telle manière qu'un tronçon de ce tube soit reçu dans un chambrage du canal pour définir avec une surface intérieure de ce chambrage un espace de circulation d'un fluide autour du tronçon de tube, le procédé comprenant les étapes de :
- relier les deux tubes au moyen d'une union (200) ayant deux extrémités mâles (201, 202) agencées pour être engagées respectivement dans le premier tube et dans le deuxième tube, l'une de ces extrémités mâles (201, 202) étant également agencée pour être engagée à force dans l'extrémité de tube et étant pourvue d'une rainure axiale externe (205), l'union (200) ayant un diamètre extérieur maximal inférieur à un diamètre minimal du passage;
- faire coulisser les deux tubes par rapport au corps jusqu'à ce que le premier tube ait pris la place du deuxième tube sans purger l'espace de circulation ;
- engager, dans le tube dans lequel est engagé l'extrémité de l'union pourvue d'une rainure (205), une lame en regard de cette rainure (205) jusqu'à ce que la lame soit reçue dans ladite rainure (205);
- déplacer la lame ainsi guidée dans la rainure (205) pour fendre le tube et pouvoir en dégager l'union (200) ;
- séparer le deuxième tube du premier tube et ôter l'union.

## Patentansprüche

1. Vorrichtung zum Setzen eines ersten Rohres (T1) an die Stelle eines zweiten Rohres (T), das auf dichte Weise mit einer Leitung eines Gehäuses (100) in Eingriff steht, derart, dass ein Abschnitt dieses Rohres in einer Kammer der Leitung aufgenommen ist, um mit einer Innenfläche dieser Kammer einen Raum zur Zirkulation eines Fluids um den Rohrabschnitt herum zu definieren, wobei die Vorrichtung ein Verbindungsorgan (200) umfasst, das zwei männliche Enden (201, 202) hat, die so ausgebildet sind, dass sie mit dem ersten Rohr bzw. mit dem zweiten Rohr in Eingriff gebracht werden können, wobei eines der männlichen Enden (201, 202) des Verbindungsorgans (200) ferner so ausgebildet ist, dass es in das Rohrende eingepresst werden kann, wobei das Verbindungsorgan einen maximalen Außendurchmesser hat, der kleiner als ein Mindestdurchmesser des Durchgangs ist, **dadurch gekennzeichnet, dass** das genannte männliche Ende, das derart ausgebildet ist, dass es in das Rohrende eingepresst werden kann, mit einer axialen Außennut (205) versehen ist.

2. Vorrichtung nach Anspruch 1, wobei mindestens eines der männlichen Enden (201, 202) des Verbindungsorgans (200) mit einem ringförmigen Dichtungselement (206) versehen ist.

3. Vorrichtung nach Anspruch 1, wobei das genannte männliche Ende (201, 202), das derart ausgebildet ist, dass es in das Rohrende eingepresst werden kann, mindestens mit einem Verankerungsrelief (204) zum Verankern des Rohrendes versehen ist.

4. Vorrichtung nach Anspruch 1, wobei mindestens eines der männlichen Enden (201, 202) des Verbindungsorgans (200) mit Schnellverbindungsmitteln (210) zum schnellen Verbinden mit dem Rohrende versehen ist.

5. Verfahren zum Setzen eines ersten Rohres (T1) an die Stelle eines zweiten Rohres (T), das auf dichte Weise mit einer Leitung eines Gehäuses (100) in Eingriff steht, derart, dass ein Abschnitt dieses Rohres in einer Kammer der Leitung aufgenommen ist, um mit einer Innenfläche dieser Kammer einen Raum zur Zirkulation eines Fluids um den Rohrabschnitt herum zu definieren, wobei das Verfahren die Schritte umfasst:
- Verbinden der beiden Rohre mittels eines Verbindungsorgans (200), das zwei männliche Enden (201, 202) hat, die derart ausgebildet sind, dass sie mit dem ersten Rohr bzw. mit dem zweiten Rohr in Eingriff gebracht werden können, wobei eines dieser männlichen Enden (201, 202) ferner derart ausgebildet ist, dass es in das Rohrende eingepresst werden kann und mit einer axialen Außennut (205) versehen ist, wobei das Verbindungsorgan (200) einen maximalen Außendurchmesser hat, der kleiner als ein Mindestdurchmesser des Durchgangs ist,
- Verschieben der beiden Rohre relativ zum Gehäuse, bis das erste Rohr den Platz des zweiten Rohres eingenommen hat, ohne den Zirkulationsraum zu entleeren,
- in dem Rohr, in dem das mit einer Nut (205) versehene Ende des Verbindungsorgans eingesteckt ist, Einführen einer Schneidklinge gegenüber dieser Nut (205), bis die Schneidklinge in der genannten Nut (205) aufgenommen ist,
- Verschieben der so in der Nut (205) geführten Schneidklinge, um das Rohr aufzuspalten und das Verbindungsorgan (200) aus diesem herausziehen zu können,
- Trennen des zweiten Rohres von dem ersten Rohr und Entfernen des Verbindungsorgans.

## Claims

1. Device for substituting a first tube (T1) for a second tube (T) engaged in a sealed manner in a channel of a body (100) such that a section of this tube is received in a recess of the channel to define with an inner surface of this recess a space for circulating a fluid around the pipe section, the device including a union (200) having two male ends (201, 202) adapted to be engaged in the first tube and in the second tube, respectively, one of the male ends (201, 202) of the union (200) also being adapted to be force-fitted in the tube end, the union having a maximum outside diameter smaller than a minimum diameter of the passage, **characterized in that** said male end adapted to be force-fitted in the tube end includes an external axial groove (205) .

2. Device according to claim 1, wherein at least one of the male ends (201, 202) of the union (200) includes an annular sealing member (206).

3. Device according to claim 1, wherein said male end (201, 202) adapted to be force-fitted in the tube end includes at least one raised portion (204) for attaching it to the tube end.

4. Device according to claim 1, wherein at least one of the male ends (201, 202) of the union (200) includes means (210) for instant connection to the tube end.

5. Method of substituting a first tube (T1) for a second tube (T) engaged in a sealed manner in a channel of a body (100) such that a section this tube is received in a recess of the channel to define with an inner surface of this recess a space for circulating a fluid around the pipe section, the method including the steps of:
- connecting the two tubes by means of a union (200) having two male ends (201, 202) adapted to be engaged in the first tube and in the second tube, respectively, one of the male ends (201, 202) also being adapted to be force-fitted in the tube end and including an external axial groove (205), the union (200) having a maximum outside diameter smaller than a minimum diameter of the passage;
- sliding the two tubes relative to the body until the first tube has taken the place of the second tube without purging the circulation space;
- engaging a blade opposite the groove (205) in the tube in which the end of the union including a groove (205) is engaged until the blade is received in said groove (205);
- moving the blade guided in this way in the groove (205) to split the tube and to be able to release the union (200) from it;
- separating the second tube from the first tube and removing the union.
